# EUROPÄISCHE PATENTSCHRIFT

(11) **EP 0 616 561 B1**
(45) Veröffentlichungstag und Bekanntmachung des Hinweises auf die Patenterteilung: **04.10.1995**
(21) Anmeldenummer: 92923690.9
(22) Anmeldetag: 01.12.1992
(51) Int. Cl.: B23H 7/30

(54) **VORRICHTUNG ZUM ELEKTROERODIEREN**
SPARK-MACHINING DEVICE
DISPOSITIF D'USINAGE PAR ELECTRO-EROSION

(30) Priorität: 09.12.1991 DE 9115269 U
(43) Veröffentlichungstag der Anmeldung: 28.09.1994
(73) Patentinhaber: SIEMENS AKTIENGESELLSCHAFT, 80333 München (DE)
(72) Erfinder: GEBALD, Georg, D-8551 Kirchehrenbach (DE); KOHLERT, Erich, D-8520 Erlangen (DE)
(86) Internationale Anmeldenummer: DE9201001
(87) Internationale Veröffentlichungsnummer: WO9311902

(56) Entgegenhaltungen:
- EP-A- 0 030 886
- US-A- 3 538 289
- US-A- 4 916 282
- US-A- 4 948 933

## Beschreibung

Die Erfindung bezieht sich auf eine Vorrichtung zum Elektroerodieren eines Werkstückes an schwer zugänglichen Stellen.

Beim Elektroerodieren von Werkstücken muß der Erodierkopf mit seiner die Elektrode aufnehmenden Erodierpinole unmittelbar über der zu bearbeitenden Stelle positioniert werden. Durch den hohen Platzbedarf solcher Erodierköpfe können insbesondere bei fest installierten Einbauten schwer zugängliche Stellen, beispielsweise am Kerngerüst im Druckbehälter eines Druckwasserreaktors, nicht mit Elektroerodierverfahren bearbeitet werden.

Der Erfindung liegt nun die Aufgabe zugrunde, eine Vorrichtung zum Elektroerodieren eines Werkstückes anzugeben, mit dem ein Elektroerodieren auch an schwer zugänglichen Stellen möglich ist.

Die genannte Aufgabe wird gemäß der Erfindung mit den Merkmalen des Anspruches 1 gelöst. Durch die Übertragung der Axialverschiebung der im Erodierkopf angeordneten Erodierpinole auf die entfernt von der Erodierpinole angeordnete Erodierelektrode mit einem flexiblen Bowdenzug muß der Erodierkopf nicht mehr unmittelbar an der zu bearbeitenden Stelle des Werkstückes positioniert werden. Somit können an einem Werkstück auch schwer zugängliche Stellen erreicht werden.

Weitere vorteilhafte Ausgestaltungen der Erfindung ergeben sich gemäß der Unteransprüche.

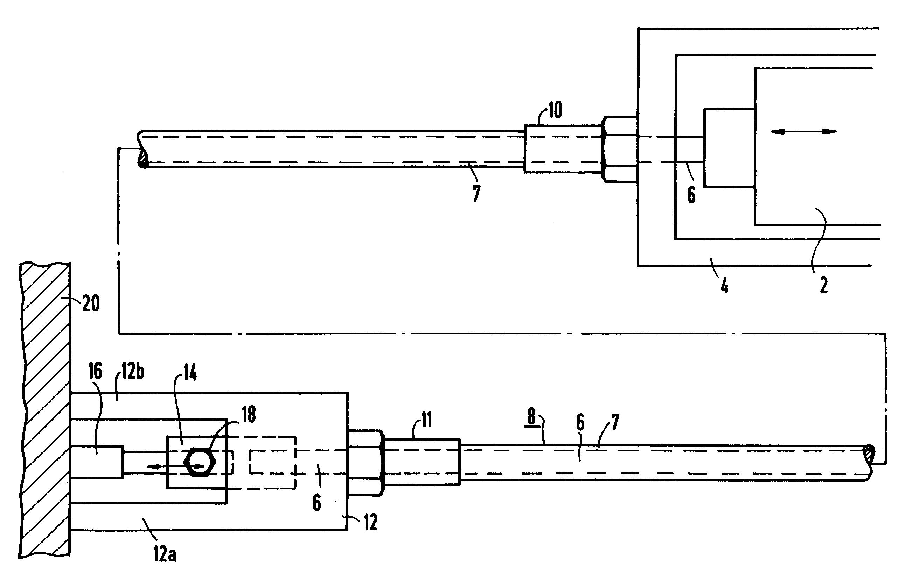

Zur weiteren Erläuterung der Erfindung wird auf das Ausführungsbeispiel der Zeichnung verwiesen, in deren einziger Figur eine Vorrichtung zum Elektroerodieren gemäß der Erfindung schematisch veranschaulicht ist.

Entsprechend der Figur ist eine in einem nicht näher dargestellten Erodierkopf angeordnete Erodierpinole 2 axial verschiebbar in einem starr mit dem Erodierkopf verbundenen Haltebügel 4 angeordnet. Die in Richtung des Doppelpfeils axial verschiebbare Erodierpinole 2 ist mit einem flexiblen Kabel 6 verbunden, das durch eine Öffnung des Haltebügels 4 hindurch in einen Bowdenzug 8 mündet, dessen flexibler Führungsmantel 7, beispielsweise ein flexibler druckfester Schlauch, vorzugsweise eine mit einem Isoliermantel versehene Spirale, mit seinem der Erodierpinole 2 zugewandten Ende von einer mit dem Haltebügel 4 verschraubten Aufnahmehülse 10 aufgenommen wird.

Der flexible Führungsmantel 7 des Bowdenzuges 8 mündet mit seinem anderen Ende in eine Aufnahmehülse 11, die mit einem Führungselement 12 verschraubt ist. Das Kabel 6 ist kraftschlüssig mit einem im Führungselement 12 axial in Richtung des Doppelpfeiles verschiebbar gelagerten Elektrodenhalter 14 verbunden, an dem eine Erodierelektrode 16 beispielsweise mit einer Schraube 18 fixiert ist.

Um auch Druckkräfte übertragen zu können ist das Kabel 6 vorzugsweise spielarm im Führungsmantel 7 angeordnet.

Das Führungselement 12 hat die Gestalt eines Bügels mit zwei Schenkeln 12a, 12b und besteht vorzugsweise aus einem Isolator. Die Elektrode 16 läßt sich in den von den Schenkeln 12a, 12b dieses Führungselementes gebildeten Hohlraum zurückziehen und wird dadurch während der von einem in der Figur nicht dargestellten Manipulator durchgeführten Positionierbewegung des Führungselementes 12 vor mechanischen Beschädigungen geschützt.

Mit Hilfe eines Manipulators kann das Führungselement 12 an die zu bearbeitende Oberfläche eines Werkstückes 20 herangeführt und dort in Arbeitsstellung fixiert werden. Die Erodierelektrode 16 hat dabei eine der jeweiligen Erodieraufgabe angepaßte äußere Form. Die Stirnflächen der Schenkel 12a, 12b stützen sich dann auf der Oberfläche des Werkstückes 20 ab. Anstelle eines bügelförmigen Führungselementes 12 kann auch ein hohlzylindrisches Führungselement vorgesehen sein.

## Patentansprüche

1. Vorrichtung zum Elektroerodieren eines Werkstückes (20) an schwer zugänglichen Stellen, mit einer in einem Erodierkopf axial verschiebbar angeordneten Erodierpinole (2) sowie einer Erodierelektrode (16), die entfernt von der Erodierpinole (2) angeordnet ist, wobei zur Übertragung einer Axialverschiebung von der Erodierpinole (2) auf die Erodierelektrode (16) ein flexibler Bowdenzug (8) vorgesehen ist.

2. Vorrichtung nach Anspruch 1, mit einer Erodierelektrode (16), die in einem Elektrodenhalter (14) angeordnet ist, der in einem Führungselement (12) axial verschiebbar geführt ist.

3. Vorrichtung nach Anspruch 2, mit einem elektrisch isolierenden Führungselement (12).

4. Vorrichtung nach Anspruch 2, deren Bowdenzug (8) durch eine flexible Spirale (7) gebildet wird, in deren Inneren ein mit der Erodierpinole (2) verbundenes flexibles Kabel (6) verläuft.

## Claims

1. Arrangement for the electroerosion of a work piece (20) in places to which access is difficult, having an erosion sleeve (2), which is arranged such that it is axially displaceable in an erosion head, and also having an erosion electrode (16) which is arranged at a distance from the erosion sleeve (2), wherein a flexible Bowden cable (8) is provided in order to transmit an axial displacement of the erosion sleeve (2) to the erosion electrode (16).

2. Arrangement according to claim 1, having an erosion electrode (16) which is arranged in an electrode holder (14) which is guided in an axially displaceable manner in a guide element (12).

3. Arrangement according to claim 2, having an electrically insulating guide element (12).

4. Arrangement according to claim 2, the Bowden cable (8) of which arrangement is formed by means of a flexible spiral (7), in the interior of which extends a flexible cable (6) which is connected to the erosion sleeve (2).

## Revendications

1. Dispositif d'usinage par électro-érosion d'une pièce à usiner (20), en des emplacements difficilement accessibles, comportant une douille d'érosion (2) montée de manière à être déplaçable axialement dans une tête d'érosion, ainsi qu'une électrode d'érosion (16), qui est montée à distance de la douille d'érosion (2), un câble Bowden flexible (8) étant prévu pour la transmission d'un déplacement axial de la douille d'érosion (2) sur l'électrode d'érosion (16).

2. Dispositif suivant la revendication 1, comportant une électrode d'érosion (16), qui est disposée dans un porte-électrode (14), qui est déplaçable axialement d'une manière guidée dans un élément de guidage (12).

3. Dispositif suivant la revendication 2, comportant un élément de guidage électriquement isolant (12).

4. Dispositif suivant la revendication 2, dont le câble Bowden (8) est formé par une spirale flexible (7), à l'intérieur de laquelle s'étend un câble flexible (6) relié à la douille d'érosion (2).
